# EUROPEAN PATENT APPLICATION

(11) **EP 4 209 465 A1**
(43) Date of publication of application: **12.07.2023**
(21) Application number: 22020004.2
(22) Date of filing: 10.01.2022
(51) Int. Cl.: C02F 11/18, C02F 11/04

(54) **LOW TEMPERATURE CHEMICAL ASSISTED THERMAL HYDROLYSIS METHOD AND APPARATUS**

(71) Applicant: ICMEA Srl leader of temporary association of companies ICMEA Srl - Tecnomec Engineering Srl - CNR IRSA, 70033 Corato (IT)
(72) Inventor: The designation of the inventor has not yet been filed

(57) **Abstract**

The present invention relates to an apparatus for the thermal hydrolysis of organic matter, wherein, with reference to the organic matter to be treated, the PH is adjusted to reduce the thermal hydrolysis temperature and, with reference to the thermal hydrolysis process, the pressurisation of the reactor is achieved using an inert gas like nitrogen, argon or similar fluids and the heating up of the fluid to be processed is obtained using one or a combination of the following methods: circulating it through one or more external heat exchangers, circulating a heat transfer medium between a heat exchanger internal to the hydrolysis reactor and one or more external heat exchangers, using an internal heat resistor, using an external trace heating.

The apparatus is composed by a pre-treatment vessel, a thermal hydrolysis reactor vessel and a flashing vessel. With reference to the organic matter to be treated, the method includes the chemical adjustment of the PH in the pre-treatment vessel, the pressurisation in the thermal hydrolysis reactor vessel, the heating up and the maintenance of the required pressure and temperature for the time necessary to complete the thermal hydrolysis process, the flashing and cooling down of the processed matter. The hydrolysed matter is typically transferred to an anaerobic digestor to produce biogas.

Advantageously the process is carried out without any addition of steam and at a lower temperature thanks to the chemical assisted PH adjustment, leading to a simpler system and cheaper process.

## Description

### Technical Field to which invention relates

The invention relates to the field of sludge treatment and disposal, in particular, to improved, low temperature and energy effective sludge thermal hydrolysis treatment methods and apparatus.

### Indication of background art

In many industrial processes and in the treatment of wastewater and solid waste are generated streams rich in organic matter. The streams generated often include pathogens and if they come from industrial processes can include recalcitrant compounds.

Anaerobic digestion is one of the most common processes to stabilise the organic matter and convert it into biogas that can be used for thermal and electrical power generation, but sometimes is not useful to eliminate pathogens and to process recalcitrant compunds potentially causing secondary pollution to the environment

The controlling step of the anaerobic digestion process is hydrolysis, that transform the soluble matter into compounds accessible to bacterial metabolism. Thermal hydrolysis can improve the hydrolysis step and is based on treating the organic matter at a sufficiently high pressure and temperature facilitating the dissolution of the solids. Additional benefits of thermal hydrolysis include the elimination of pathogens and the reduction of recalcitrant compounds.

State of the art systems include the Cambi batch process that operates with direct steam injection heating, improving the anaerobic biodegradability of solids and increasing biogas production. 2820735 French patent FR deposited by Vivendi Water Systems in 2001 sponsored by the use of two reactors operating batchwise and in parallel. The batch operation forced to work in batches, using systems with more complex sequences using reactors operation and higher volume. In U.S. Pat. No. 5593591, 1997 is claimed a system in which a mud pumped under pressure is heated in driving itself, before being decompressed through a nozzle and into a camera flash. The goal of treatment is to produce a hydrolysed sludge with good flow characteristics (free flowing solids). In U.S. Pat. No. 1998 5785852 a process and equipment for the treatment of biological sludge is claimed to improve secondary anaerobic digestion. The process combines multistage heating steps, explosive decompression and application of shear forces. A HydroHeater is the vapor mixing system and sludge suggested as more effective. The hot and pressurized sludge is brought to a flash chamber operates at atmospheric pressure. The partially disintegrated sludge is brought to a new stage where it is subjected to shear forces (shear forces) to complete the process of cell rupture. In U.S. Pat. No. 2004/0168990 a method and device for continuous hydrolysis claimed. The slurry is preheated to about 100 DEG C in a heat exchanger and then is mixed in an unspecified device, steam from 1 to 4 bar and taken to a preheating tank. A pump pushes the hot liquid, which in an external device to the hydrolysis reactor receives an injection of steam and into the hydrolysis reactor. The sludge / steam mixture to 1-4 bar is decompressed through a nozzle (nozzle) which causes instantaneous pressure drop. The sludge, hydrolysed and hot, is pumped from the depressurization chamber to the initial changer. The device consists of three pumps, two external devices mixture of steam and mud.

### Technical problem to be solved

The prior art systems include the use of steam to heat up the thermal hydrolysis reactor and thus have the disadvantage of complexity.

Furthermore the typical operating pressure and temperature of prior art systems are in the range 6 bar - 10 bar and 150°C - 170 °C or more, making state of the art systems often not economically viable because of their high operating cost.

The present invention allows:
1) To reduce the operating cost because of the lower thermal hydrolysis process temperature, in the range 90°C - 130°C achievable by means of the chemical adjustment of the PH of the organic matter processed
2) To reduce the investment cost thanks to the elimination of the use of steam or other complicated methods to achieve the required process temperature.

### Disclosure of invention

In accordance with the present invention, an apparatus and a method for chemical assisted low temperature thermal hydrolysis of organic matter are disclosed.

The apparatus is characterised in that, with reference to the organic matter to be treated, the PH is adjusted to reduce the thermal hydrolysis temperature and, with reference to the thermal hydrolysis process, the pressurisation of the reactor is achieved using an inert gas like nitrogen, argon or similar gas and the heating up of the fluid to be processed is obtained using one or a combination of the following methods: circulating it through one or more external heat exchangers, circulating a heat transfer medium between a heat exchanger internal to the hydrolysis reactor and one or more external heat exchangers, using an internal heat resistor, using an external trace heating.

The apparatus is composed by a pre-treatment vessel, a thermal hydrolysis reactor vessel and a flashing vessel. With reference to the organic matter to be treated, the method includes the chemical adjustment of the PH in the pre-treatment vessel, the pressurisation in the thermal hydrolysis reactor vessel, the heating up and the maintenance of the required pressure and temperature for the time necessary to complete the thermal hydrolysis process, the flashing and cooling down of the processed matter. The hydrolysed matter is typically transferred to an anaerobic digestor to produce biogas. Advantageously the process is carried out without any addition of steam and at a lower temperature thanks to the chemical assisted PH adjustment, leading to a simpler system and cheaper process. The pre-treatment vessel is equipped at least with an agitator, a PH probe, a temperature sensor and a pressure sensor. One pump adds acids, one pump adds bases for controlling the organic matter PH.

The thermal hydrolysis reaction vessel is connected to a pressurised source of an inert fluid like Nitrogen, Argon or similar gases. It is equipped at least with one pressure sensor and one temperature sensor and an over pressure valve. It is connected to external heat exchangers and to the flashing vessel.

Advantageously, the pressurisation of the reactor is achieved using a pressurised source of inert gas and not steam, with a significant simplification of the system. The pressure is such that the water is always maintained in liquid phase. Pressure and temperature are maintained for the required time and subsequently the fluid is flashed and cooled down. Typically, the processed fluid is transferred to an anaerobic digestor.

Further benefits and advantages of the present invention will become apparent after a careful reading of the detailed description with appropriate reference to the accompanying drawing.

### Brief Description of the drawings

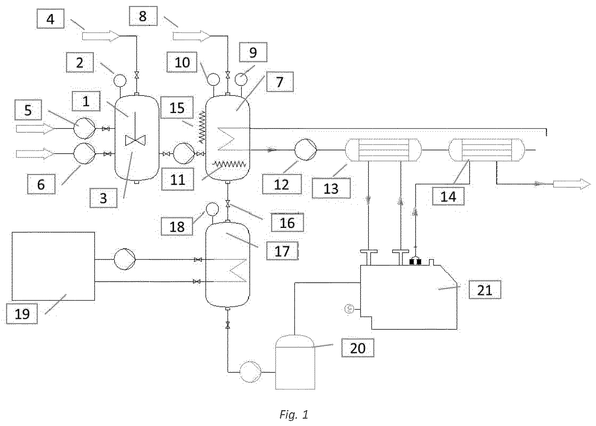

Fig. 1 shows a diagram of the method and apparatus proposed.

### Description of at least one way of carrying out the invention

Referring to the drawing a method and apparatus for chemical assisted low temperature thermal hydrolysis of organic matter is disclosed in accordance with the preferred embodiment for the present invention. The apparatus comprises a pre-treatment vessel 1 equipped with the PH probe 2 and the agitator 3.

The organic fluid to be treated is loaded through the inlet 4. Depending on the composition of the fluid to be treated the PH is adjusted. Activating the pump 5 an acid is added, activating the pump 6 a base is added. The pre-treatment process is completed when the required PH is achieved, then the organic matter is transferred to the hydrolysis reactor vessel 7. The thermal hydrolysis process is initiated connecting the vessel 7 to the pressurised source of inert gas 8. The inert gas like Nitrogen, Argon or similar fluid flows into the vessel 7 until the required pressure is reached. The pressure is measured by the sensor 9 and is in the range 2 bar - 10 bar. Subsequently the pump 12 is activated and the organic matter is heated up passing through the heat exchangers 13 and 14. As an option the thermal hydrolysis vessel can be equipped with an internal heat exchanger and the fluid to be processed can be heated up flowing a heat transfer fluid between the thermal hydrolysis reactor and the external heat exchangers. If necessary, the heating resistor 11 and the electrical trace heater 15 are activated. The heat up process is completed when the required temperature is reached. Due to the chemical assistance in the pre-treatment step, the thermal hydrolysis process temperature, measured by means of the temperature sensor 10 is in the range 90 -130 °C. The thermal hydrolysis temperature is always below the boiling temperature of the fluid processed and the water is always in the liquid phase. Pressure and temperature are maintained for the time required to complete the process, that is in the range 15 - 60 minutes. Subsequently the valve 16 is opened and the hydrolysed organic matter is passed through the atmospheric flash tank 17, where a sudden drop in pressure causes cells to burst. The chiller 19 is then subsequently activated and the hydrolysed organic matter is cooled down before entering the anaerobic digestor 20 to produce biogas. The biogas produced, in the preferred embodiment, is used in a co-generator 21 to produce electricity and heat. Heat is recovered from reciprocating engine cooling water in the heat exchanger 13 and from exhaust gas in the heat exchanger 14.

Although the invention has been explained in relation to its preferred embodiment as mentioned above, it is to be understood that many other possible modifications and variations can be made without departing from the scope of the present invention. It is, therefore, contemplated that the appended claims will cover such modifications and variations that fall within the true scope of the invention.

## Claims

1. A thermal hydrolysis apparatus **characterised in that** the PH of the organic matter to be treated is chemically adjusted in a pre-treatment vessel to reduce the thermal hydrolysis process temperature.

2. A thermal hydrolysis apparatus according to claim 1, **characterised in that** the organic matter to be treated is transferred to a thermal hydrolysis reactor after the PH adjustment.

3. A thermal hydrolysis apparatus as claimed in any preceding claims, in which the thermal hydrolysis reactor is pressurised using an inert gas like nitrogen, argon or similar fluids.

4. A thermal hydrolysis apparatus as claimed in any preceding claim, in which the heating up of the organic matter in the thermal hydrolysis reactor can be achieved using an internal heating resistor.

5. A thermal hydrolysis apparatus as claimed in (1), (2) or (3), in which the heating up of the organic matter in the thermal hydrolysis reactor can be achieved using an external trace heating.

6. A thermal hydrolysis apparatus as claimed in (1), (2) or (3), in which the heating up of the organic matter in the thermal hydrolysis reactor can be achieved circulating the aforementioned organic matter through one or more external heat exchangers.

7. A thermal hydrolysis apparatus as claimed in (1), (2) or (3), in which the thermal hydrolysis reactor can be equipped with an internal heat exchanger

8. A thermal hydrolysis apparatus as claimed in (7), in which the heating up of the organic matter in the thermal hydrolysis reactor can be achieved circulating a heat transfer medium between the thermal hydrolysis reactor internal heat exchanger and one or more external heat exchangers.

9. A thermal hydrolysis apparatus as claimed in (1), (2) or (3), in which the heating up of the organic matter in the thermal hydrolysis reactor can be achieved with a combination of an internal heating resistor, an external trace heating, circulating the organic matter to be processed through one or more external heat exchangers, circulating a heat transfer medium between a thermal hydrolysis reactor internal heat exchanger and one or more external heat exchangers.

10. A thermal hydrolysis apparatus as claimed in any preceding claim in which the external heat exchangers recover heat from a co-generator.

11. A thermal hydrolysis apparatus as claimed in any preceding claim in which the flash vessel is equipped with an internal heat exchanger and the cooling of the organic matter processed is achieved circulating a heat transfer fluid between the aforementioned heat exchanger and an external chiller

12. A thermal hydrolysis apparatus as claimed in (1) to (10) in which the flash vessel is equipped with a cooling jacket and the cooling of the organic matter processed is achieved circulating a heat transfer fluid between the aforementioned cooling jacket and an external chiller.

13. A thermal hydrolysis apparatus substantially as herein before described with reference to and as illustrated by the accompanying drawing.
